# FASCICULE DE BREVET EUROPEEN

(11) **EP 0 599 743 B1**
(45) Date de publication et mention de la délivrance du brevet: **24.04.1996**
(21) Numéro de dépôt: 93420454.6
(22) Date de dépôt: 17.11.1993
(51) Int. Cl.: H02B 1/052, H01R 9/26

(54) **Dispositif de support pour appareillage électrique modulaire**
Tragvorrichtung für modulare, elektrische Geräte
Support device for modular, electrical appliances

(30) Priorité: 26.11.1992 FR 9214357
(43) Date de publication de la demande: 01.06.1994
(73) Titulaire: SCHNEIDER ELECTRIC SA, F-92100 Boulogne-Billancourt (FR)
(72) Inventeur: Dupepet, Louis, F-38050 Grenoble Cedex 09 (FR); Vigne-Salade, Pierre, F-38050 Grenoble Cedex 09 (FR); Vollet, Philippe, F-38050 Grenoble Cedex 09 (FR)
(74) Mandataire: Hecke, Gérard

(56) Documents cités:
- AT-A- 337 807
- CH-A- 483 136
- DE-A- 3 113 679
- DE-U- 7 601 370

## Description

La présente invention concerne de façon générale un support pour un ensemble d'appareillages électriques modulaires, constituant une armoire ou un coffret électrique.

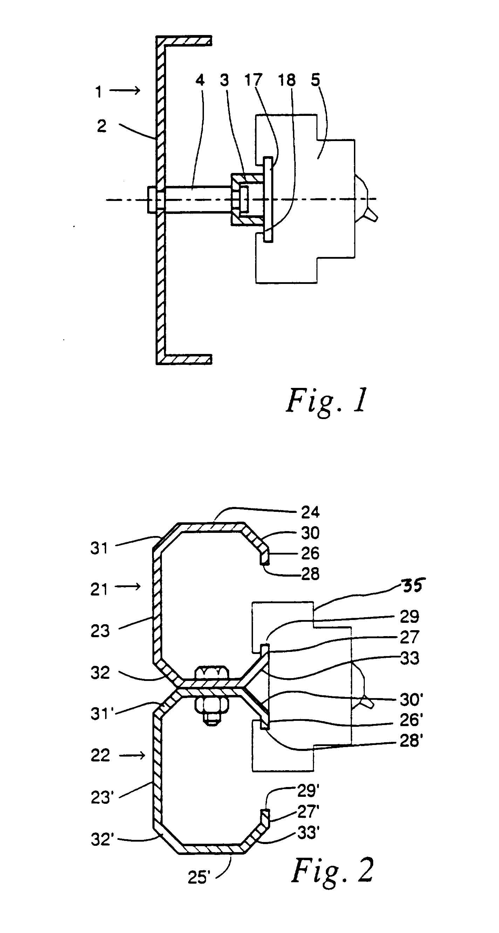

Un exemple de coffret électrique connu de l'art antérieur est représenté sur la figure 1. Ce coffret connu est généralement constitué par un support sur lequel sont fixés un certain nombre d'appareillages électriques divers. Ce support peut comporter une platine rigide 1 comprenant essentiellement une paroi rigide sensiblement plane et verticale 2 sur laquelle sont fixés rigidement des profilés spéciaux 3 qui s'étendent horizontalement parallèlement à la paroi verticale de la platine. Ces profilés spéciaux 3 sont en outre disposés parallèlement les uns aux autres, de façon superposée. Ces profilés spéciaux 3 sont disposés à l'avant de la paroi verticale 2 de la platine 1 et à une certaine distance de celle-ci, et ils sont reliés rigidement à la paroi verticale de la platine par l'intermédiaire d'un certain nombre d'entretoises 4. Dans certains cas, les entretoises s'étendent horizontalement et traversent la paroi verticale 2, de telle sorte qu'une extrémité avant de l'entretoise est reliée rigidement à un profilé spécial 3 et qu'une extrémité arrière de l'entretoise est reliée rigidement à une borne de connexion 4. Il résulte de cela que la partie avant du coffret électrique, c'est-à-dire la partie située à l'avant de la paroi verticale 2 de la platine 1, comporte un grand nombre d'appareillages électriques modulaires 5 et que la partie arrière du coffret électrique, c'est-à-dire la partie située à l'arrière de cette même paroi verticale 2 de la platine, comporte un certain nombre de bornes électriques (non représentées). Des ouvertures (non représentées) sont alors généralement prévues dans la paroi verticale 2 de la platine afin de faire passer des câbles électriques au travers de ces ouvertures pour qu'ils relient des appareillages électriques 5 situés à l'avant et des bornes électriques situées à l'arrière ou d'autres éléments situés à l'arrière. Les profilés spéciaux 3 sont en général des profilés qui sont constitués d'une façon normalisée, par exemple selon une norme DIN, et pour cette raison, on appellera dans la suite du texte ces profilés spéciaux des "profilés DIN".

De tels supports présentent comme inconvénient que la platine a des dimensions fixes en largeur et en hauteur. Par conséquent, une personne chargée d'agencer un coffret électrique doit tout d'abord prévoir une platine présentant des dimensions adaptées à l'usage qui va en être fait, et si par la suite l'installation électrique doit être modifiée, il n'est plus possible d'augmenter la capacité de la platine sans changer celle-ci.

Pour remédier à cet inconvénient, il a déjà été proposé de constituer une telle platine en plusieurs éléments différents modulaires pouvant être reliés rigidement les uns aux autres afin de pouvoir constituer à partir d'un ensemble de ces éléments des platines de différentes dimensions, en fonction de l'usage qui doit en être fait. De telles platines présentent cependant l'inconvénient que les éléments qui la constituent sont de plusieurs catégories différentes, présentent des formes complexes et manquent de rigidité. En outre, ces éléments doivent être reliés rigidement à des profilés spéciaux, par exemple des profilés DIN, en utilisant des entretoises comme pièces intermédiaires. Ceci rend l'ensemble relativement complexe et difficile à monter. D'autres platines connues intègrent des éléments qui constituent les profilés spéciaux, par exemple les profilés DIN, mais l'ensemble reste relativement complexe, difficile à monter et présente une rigidité faible.

Un objet de la présente invention consiste à proposer un support pour un ensemble d'appareillages électriques modulaires réalisé à partir d'un ensemble de pièces pouvant être reliées rigidement les unes aux autres de façon à constituer un support dont les dimensions peuvent être adaptées à l'usage qui doit en être fait.

Un autre objet de la présente invention consiste à proposer un tel support présentant une grande simplicité de construction et une grande simplicité de montage.

Un autre objet de la présente invention consiste à proposer un tel support pouvant en outre recevoir des appareillages électriques et/ou des bornes électriques à la fois sur sa partie avant et sur sa partie arrière.

L'invention concerne donc un support pour un ensemble d'appareillages électriques modulaires constituant un coffret électrique.

Selon une caractéristique essentielle de la présente invention, le support comprend au moins deux profilés métalliques identiques superposés, fixés rigidement l'un à l'autre au niveau de leurs parties respectives en contact, en ce que chacun desdits profilés est constitué par une seule pièce de profilé s'étendant de façon rectiligne et présentant une section en coupe transversale ayant une forme générale d'un C, et en ce que chaque profilé comporte :
une partie plane verticale longitudinale ;
une partie plane horizontale supérieure longitudinale reliée latéralement à ladite partie plane verticale ;
une partie plane horizontale inférieure longitudinale reliée latéralement à ladite partie plane verticale ; et
deux premières parties de rebord qui sont planes, verticales et de faible hauteur et qui s'étendent respectivement sur la longueur du profilé à partir de chacun de ses deux bords longitudinaux ;
d'où il résulte qu'au moins deux de ces dits profilés sont disposés de façon jointive, parallèle et superposée et sont fixés rigidement l'un à l'autre au niveau des leurs parties planes horizontales respectives, de telle sorte que l'ensemble ainsi constitué peut recevoir lesdits appareillages électriques modulaires, chacun de ces appareillages électriques modulaires venant s'emboiter à la fois sur une première partie de rebord inférieure d'un profilé supérieur et sur une première partie de rebord supérieure du profilé inférieur adjacent au profilé supérieur.

Selon un mode de réalisation particulier de l'invention, le profilé comprend en outre :
une fenêtre sensiblement rectangulaire allongée horizontale ménagée dans ladite partie plane verticale ;

D'où il résulte que l'ensemble ainsi constitué peut recevoir des appareillages supplémentaires, chacun de ces appareillages venant s'emboiter à l'arrières des profilés à la fois sur une première partie inférieure de rebord de la fenêtre d'un profilé supérieur et sur une première partie supérieure de rebord de la fenêtre du profilé inférieur adjacent au profilé supérieur.

Ces objets, caractéristiques et avantages de la présente invention seront mieux compris lors de la description détaillée d'exemples de réalisation qui va suivre, illustrée par les figures annexées parmi lesquelles :
la figure 1 est une vue en coupe simplifiée d'une partie d'un support pour un ensemble d'appareillages électriques modulaires de l'art antérieur, figure à laquelle des explications précédentes se sont référées ;
la figure 2 est une vue en coupe simplifiée d'un support selon la présente invention ;
la figure 3 est une vue en coupe simplifiée d'un autre mode de réalisation d'un support selon l'invention ; et
la figure 4 est une vue de face d'un des éléments du support représentés sur la figure 3.

Sur la figure 2, on distingue une partie d'un premier mode de réalisation d'un support selon la présente invention. Ce support est constitué de façon générale par deux profilés 21, 22 qui sont de préférence identiques. La coupe de la figure 2 est prise d'une façon transversale à la direction longitudinale de ces profilés. Dans un support réel destiné à constituer un coffret électrique, on assemble en général plus de deux de ces profilés identiques, mais dans la suite du texte on décrira ce support comme étant constitué par au moins deux de ces profilés.

Dans la suite de la description, par souci de simplification des explications, on supposera que ces profilés 21, 22 sont agencés horizontalement et sont disposés verticalement l'un au-dessus de l'autre pour former un support s'étendant de façon générale verticalement. Les termes "horizontal" et "vertical" seront par conséquent considérés comme étant relatifs à cette position particulière des profilés, et il est bien entendu que l'invention ne sera pas limitée par ces qualificatifs "horizontal" ou "vertical".

Chaque profilé 21, 22 présente une section en coupe transversale ayant une forme générale d'un C, comme on peut le voir sur la figure 2.

Chaque profilé 21, 22 comporte :
une partie plane verticale longitudinale 23 ;
une partie plane horizontale supérieure longitudinale 24 reliée latéralement à ladite partie plane verticale 23 ;
une partie plane horizontale inférieure longitudinale 25 reliée latéralement à ladite partie plane verticale 23 ; et
deux premières parties de rebord 26, 27 qui sont planes, verticales et de faible hauteur et qui s'étendent respectivement sur la longueur du profilé à partir de chacun de ses deux bords longitudinaux 28, 29.

En fait, le profilé 21, 22 est réalisé à partir d'une tôle plane d'épaisseur constante qui est découpée et poinçonnée et qui est ensuite pliée pour prendre la forme générale, en coupe transversale, d'un C. Les parties de liaison qui relient la partie plane verticale 23, la partie plane horizontale supérieure 24, la partie plane inférieure 25 et les deux premières parties de rebord 26, 27 sont des parties qui portent respectivement les index de référence 30, 31, 32 et 33 peuvent être disposées d'une façon plane, à 45°, comme cela est représenté sur la figure 2, mais elles peuvent être également disposées selon une forme arrondie. On pourrait aussi envisager que les parties de liaison 30, 31, 32 et 33 soient simplement formées par une pliure à 90° réalisée entre les parties planes respectives 23, 24, 25, 26 et 27. Dans ce dernier cas, la forme générale d'un C s'apparenterait à une forme d'un rectangle ouvert sur un côté, mais dans la suite de la description, on appellera "forme générale d'un C" toutes ces formes énoncées précédemment.

Le profilé 22 est identique au profilé 21, et il comporte de la même façon des parties identiques à celles décrites en relation avec le profilé 21, ces parties étant référencées d'une façon semblable à l'aide des index de référence 23', 24', 25', 26', 27', 28', 29', 30', 31', 32' et 33'.

La partie plane inférieure 25 du profilé supérieur 21 est située contre la partie plane supérieure 24' du profilé inférieur 22, et ces deux parties adjacentes sont fixées rigidement l'une à l'autre par un moyen de fixation quelconque, par exemple par des boulons 34 disposés régulièrement sur la longueur des profilés. Bien entendu, des trous sont ménagés dans les parties planes inférieures et supérieures pour permettre le passage de ces boulons 34. Puisque les profilés sont tous identiques, un profilé le plus inférieur comprendra des trous de passage (non représentés) pour des boulons 34 dans sa partie plane horizontale inférieure, ces trous de passage étant alors inutilisés pour cela ou pouvant être utilisés afin de fixer d'autres éléments sur ce profilé le plus inférieur ou afin de fixer l'ensemble des profilés ainsi reliés rigidement les uns aux autres à une pièce de support quelconque (non représentée).

Quand un support selon la présente invention est ainsi agencé d'une façon qui est représentée sur la figure 2, en assemblant au moins deux profilés 21, 22, ce support peut recevoir un certain nombre d'appareillages électriques modulaires 35, chacun de ces appareillages électriques modulaires 35 venant s'emboîter à la fois sur une première partie de rebord inférieure 27 du profilé supérieur 21 et sur une première partie de rebord supérieure 26' du profilé inférieur 22 qui est adjacent au profilé supérieur 21. Par conséquent, l'ensemble relié rigidement constitué par cette première partie de rebord 27 et cette première partie de rebord 26' constitue une embase pour la fixation d'appareillages électriques modulaires 35. En effet, un certain nombre d'appareillages électriques modulaires classiques présentent des formes particulières de leurs boîtiers qui sont normalisées et qui sont telles que le boîtier de chaque appareillage électrique modulaire peut s'emboîter sur un profilé spécial, appelé profilé DIN, qui présente généralement deux parties de rebord planes rectilignes parallèles l'une à l'autre, l'une de ces parties de rebord 17 étant une partie de rebord supérieure se projetant vers le haut et l'autre partie 18 étant une partie de rebord inférieure se projetant vers le bas (voir figure 1 qui illustra l'art antérieur). Les parties de rebord 27 et 26' sont par conséquent identiques aux parties correspondantes 17, 18 d'un profilé DIN classique tel que celui qui est représenté sur la figure 1.

Un profilé en forme de C réalisé à partir d'une tôle métallique plane d'épaisseur constante, découpée, poinçonnée ou emboutie puis pliée est un profilé qui est très facile à fabriquer, qui a un coût de revient très faible et qui présente des caractéristiques de résistance mécanique très bonnes, en particulier une très bonne rigidité. En outre, le fait de relier rigidement plusieurs de ces profilés les uns aux autres augmente la résistance mécanique de l'ensemble ainsi constitué. On voit que le nombre de pièces différentes nécessaires pour réaliser un tel support selon la présente invention est très faible, puisque le support peut être en fait réalisé uniquement à partir de profilés 21, 22 qui peuvent être tous identiques et à partir de boulons 34 qui peuvent être tous identiques.

En modifiant le nombre des profilés qui sont reliés les uns aux autres, on peut faire varier à volonté la dimension en hauteur du support selon l'invention, et par conséquent on peut faire varier à volonté sa capacité de support des appareillages électriques modulaires.

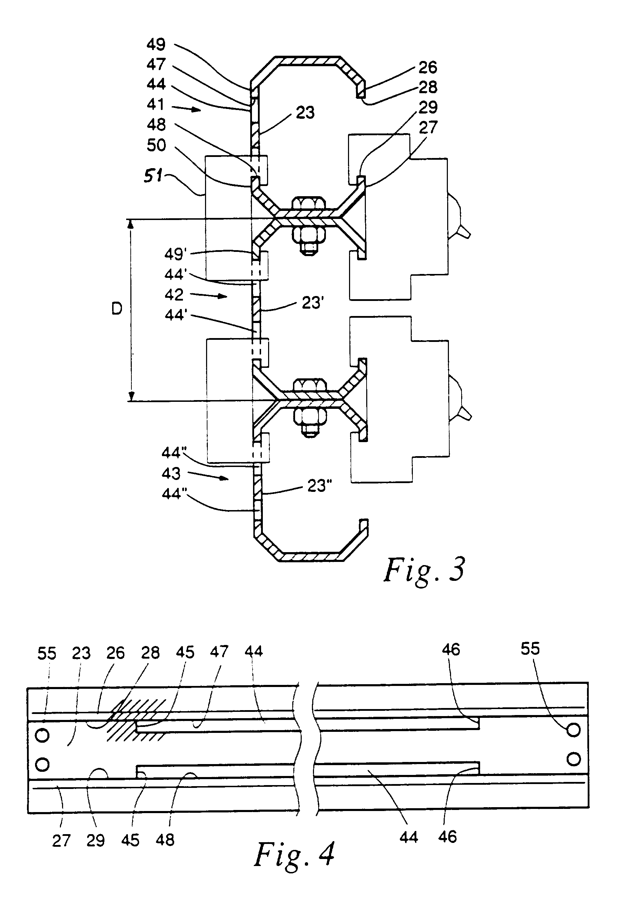

Sur la figure 3, on a représenté un autre mode de réalisation d'un support selon la présente invention. Dans ce second mode de réalisation, on utilise des profilés 41, 42, 43 qui sont identiques aux profilés 21, 22 du premier mode de réalisation (figure 2). Toutefois, chacun de ces profilés 41, 42, 43 comporte en outre au moins une fenêtre sensiblement rectangulaire allongée horizontale 44, 44', 44'' qui est ménagée dans la partie plane verticale 23, 23', 23'' du profilé correspondant 41, 42, 43. Sur cette figure 3, on a en fait représenté deux fenêtres identiques superposées, au lieu d'une seule, cela afin d'augmenter la rigidité de l'ensemble.

Sur cette figure 3, on a représenté trois profilés superposés (au lieu de deux profilés superposés qui sont représentés sur la figure 2), ceci afin de montrer qu'un support selon l'invention peut être effectivement constitué par plus de deux profilés. Dans un support réellement agencé, il sera en fait généralement prévu plus de trois profilés. Toutefois, on voit que si on souhaite assembler rigidement ensemble plus de deux profilés, comme par exemple dans le cas de la figure 3 où trois profilés sont reliés rigidement les uns aux autres, il est nécessaire que la distance D en hauteur qui sépare une partie plane horizontale inférieure 25 d'une partie plane horizontale supérieure 24 d'un même profilé soit supérieure à la distance minimale d'entraxe entre deux appareillages électriques modulaires 35 disposés côte à côte l'un au-dessus de l'autre. Si on souhaite assembler uniquement deux profilés l'un à l'autre, comme cela est représenté sur la figure 2, la distance qui sépare une partie plane inférieure 25 et une partie plane supérieure 24 d'un même profilé peut être inférieure à cette distance D. Dans ce cas, si on souhaite agencer plus d'une seule rangée d'appareillages électriques modulaires, il sera nécessaire de constituer plusieurs paires de profilés, chaque paire de profilés comprenant uniquement deux profilés reliés rigidement l'un à l'autre, puis de fixer ces plusieurs paires de profilés d'une façon superposée et parallèle en reliant les paires les unes aux autres ou en reliant les paires à un élément de support commun.

Chacun des profilés identiques 41, 42, 43 comprend en outre une ou deux fenêtres sensiblement rectangulaires allongées horizontales 44, 44', 44'' qui sont ménagées dans la partie plane verticale 23, 23', 23'' correspondante. Puisque les profilés sont tous identiques, on ne décrira par la suite qu'une seule paire de fenêtres 44 parmi ces fenêtres représentées 44, 44', 44''. La fenêtre 44 est vue en coupe sur la figure 3 et est vue en plan sur la figure 4. La fenêtre 44 comprend deux bords latéraux 45, 46 qui sont verticaux et deux bords latéraux 47, 48 qui sont horizontaux. Le bord horizontal 47 est situé d'une façon parallèle et à une même hauteur par rapport au bord longitudinal 28 du profilé 42 et le bord horizontal inférieur 48 est disposé d'une façon horizontale et à une même hauteur par rapport au bord longitudinal correspondant 29 du même profilé 42. Il résulte de cela que le profilé 42 présente une forme symétrique par rapport à un plan vertical central, c'est-à-dire que le profilé 42 comporte également, au niveau de sa partie plane verticale 23, des secondes parties de rebord 49, 50 qui sont planes, verticales et de faible hauteur et qui s'étendent respectivement sur la longueur du profilé 42 à partir de chacun de ses bords horizontaux 47, 48 de sa fenêtre 44. Par conséquent, les secondes parties de rebord 49, 50 sont disposées d'une façon symétrique par rapport à un plan vertical par rapport aux premières parties de rebord correspondantes 26, 27 du même profilé 41. Il résulte de cela qu'il est alors possible d'agencer au niveau de la partie arrière du support qui est réalisé un autre appareil modulaire 51, par exemple un autre appareillage électrique ou une borne de connexion, cet autre appareil modulaire 51 venant s'emboîter à la fois sur une seconde partie de rebord inférieure 50 d'un profilé supérieur 41 et sur une seconde partie de rebord supérieure 49' du profilé inférieur 42 qui est adjacent au profilé supérieur 41. En outre, la présence de la fenêtre 44 permet de faire passer des câbles électriques au travers du profilé 41, par exemple pour établir des connexions électriques entre un appareillage 35 situé à l'avant et un autre appareillage 51 situé à l'arrière.

Afin d'augmenter la rigidité du profilé, on peut remplacer l'unique fenêtre 44 par deux fenêtres plus étroites en hauteur 44, identiques et disposées l'une au-dessus de l'autre, comme cela est en fait représenté sur la figure 3. Par conséquent, dans le texte qui précède, on entend par "fenêtre" autant une unique fenêtre que deux fenêtres superposées.

Les profilés peuvent comprendre en outre des parties 55, par exemple des trous, au niveau des leurs extrémités, destinées à permettre la fixation des profilés sur un châssis quelconque (non représenté).

## Revendications

1. Support pour un ensemble d'appareillages électriques modulaires constituant un coffret électrique, caractérisé en ce qu'il comprend au moins deux profilés métalliques (21, 44) identiques, superposés, fixés rigidement l'un à l'autre au niveau de leurs parties respectives en contact, en ce que chacun desdits profilés est constitué par une seule pièce de profilé s'étendant de façon rectiligne et présentant une section en coupe transversale ayant une forme générale d'un C, et en ce que chaque profilé comporte :
une partie plane verticale longitudinale (23) ;
une partie plane horizontale supérieure longitudinale (24) reliée latéralement à ladite partie plane verticale ;
une partie plane horizontale inférieure longitudinale (25) reliée latéralement à ladite partie plane verticale (23) ; et
deux premières parties de rebord (26, 27) qui sont planes, verticales et de faible hauteur et qui s'étendent respectivement sur la longueur du profilé à partir de chacun de ses deux bords longitudinaux (26, 29) ;
d'où il résulte qu'au moins deux de ces dits profilés sont disposés de façon jointive, parallèle et superposée et sont fixés rigidement l'un à l'autre au niveau des leurs parties planes horizontales respectives, de telle sorte que l'ensemble ainsi constitué peut recevoir lesdits appareillages électriques modulaires (35), chacun de ces appareillages électriques modulaires venant s'emboiter à la fois sur une première partie de rebord inférieure (27) d'un profilé supérieur (23) et sur une première partie de rebord supérieure (26') du profilé inférieur (24) adjacent au profilé supérieur.

2. Support pour un ensemble d'appareillages électriques modulaires selon la revendication 1, caractérisé en ce que le profilé comprend en outre :
au moins une fenêtre (44) sensiblement rectangulaire allongée horizontale ménagée dans ladite partie plane verticale ;
d'où il résulte que l'ensemble ainsi constitué peut recevoir des appareillages supplémentaires (51), chacun de ces appareillages (51) venant s'emboîter à l'arrière des profilés à la fois sur une première partie inférieure de rebord (50) de la fenêtre (44) d'un profilé supérieur (41) et sur une première partie supérieure de rebord (49') de la fenêtre (44) du profilé inférieur (42) adjacent au profilé supérieur.

## Patentansprüche

1. Montagevorrichtung für eine Anordnung aus modularen elektrischen Schaltgräten, die einen Installationskasten bildet, dadurch gekennzeichnet, daß sie mindestens zwei, übereinander angeordnete identische Profilsehienen (21, 22) aus Metall umfaßt, die im Bereich ihrer miteinander in Berührung stehenden Flächen biegesteif aufeinander befestigt sind, daß jede der genannten Profilschienen aus einem einzigen, geradlinig verlaufenden Profilteil mit einem im wesentlichen C-förmigen Querschnitt besteht und jede Profilschiene
eine ebene. senkrechte längliche Fläche (23),
eine ebene, waagerechte obere längliche Fläche (24), die seitlich mit der genannten ebenen senkrechten Fläche verbunden ist,
eine ebene, waagerechte untere längliche Fläche (25), die seitlich mit der genannten ebenen senkrechten Fläche verbunden ist, und
zwei erste ebene, senkrechte Deckflächen (26, 27) mit geringer Höhe aufweist, die sich jeweils ausgehend von den beiden Längsrändern (28, 29) über die Länge der Profilschiene erstrecken,
wodurch sich ergibt, daß mindestens zwei dieser genannten, parallel übereinander angeordneten Profilschienen zu einer Einheit verbunden und im Bereich ihrer jeweiligen ebenen, waagerechten Flächen biegesteif aufeinander befestigt sind, derart daß die so gebildete Anordnung die genannten modularen elektrischen Schaltgeräte (35) aufnehmen kann, wobei jedes dieser elektrischen Schaltgeräte gleichzeitig auf einer ersten, unteren Deckfläche (27) einer oberen Profilschiene (21) und auf einer ersten, oberen Deckfläche (26') der an die obere Profilschiene angrenzenden unteren Profilschiene (22) aufgesetzt wird.

2. Montagevorrichtung für eine Anordnung aus modularen elektrischen Schaltgeräten nach Anspruch 1, dadurch gekennzeichnet, daß die Profilschiene darüber hinaus
mindestens eine, in der genannten ebenen, senkrechten Fläche ausgebildete, annähernd rechteckige, längliche waagerechte Ausnehmung (44) aufweist,
wodurch sich ergibt, daß die so gebildete Anordnung zusätzliche Schaltgeräte (51) aufnehmen kann, wobei jedes dieser Schaltgeräte (51) auf der Rückseite der Profilschienen gleichzeitig auf einer zweiten, unteren Deckfläche (50) der Ausnehmung (44) einer oberen Profilschiene (41) und auf einer zweiten, oberen Deckfläche (49') der Ausnehmung (44) der an die obere Profilschiene angrenzenden unteren Profilschiene (42) aufgesetzt wird.

## Claims

1. A support for a set of modular electrical switchgear units forming an electrical cabinet or enclosure, characterized in that it comprises at least two identical superposed metallic profiled sections (21, 44), rigidly secured to one another at the level of the respective parts in contact, that each of said profiled sections is formed by a single part of profiled section extending in a straight manner and presenting a transverse cross-section having a general C shape, and that each profiled section comprises :
a vertical flat longitudinal part (23) ;
an upper horizontal flat longitudinal part (24) joined laterally to said vertical flat part ; a lower horizontal flat longitudinal part (25) joined laterally to said vertical flat part (23) ; and
two first edge parts (26, 27) which are flat, vertical and of small height and which extend respectively over the length of the profiled section from each of its longitudinal edges (26, 29) ;
which results in at least two of said profiled sections being arranged in joined, parallel and superposed manner and being rigidly secured to one another at the level of their respective horizontal flat parts, in such a way that the assembly thus formed can receive said modular electrical switchgear units (35), each of these modular electrical switchgear units being fitted both onto a first bottom edge part (27) of an upper profiled section (23) and onto a first top edge part (26') of the lower profiled section (24) adjacent to the upper profiled section.

2. The support for a set of modular electrical switchgear units according to claim 1, characterized in that the profiled section comprises in addition :
an appreciably rectangular elongated horizontal window (44) arranged in said vertical flat part ;
which results in the assembly thus constituted being able to receive additional switchgear units (51), each of these switchgear units (51) being fitted at the rear of the profiled sections onto both a lower first edge part (50) of the window (44) of an upper profiled section (41) and an upper first edge part (49') of the window (44) of the lower profiled section (42) adjacent to the upper profiled section.
